Europäisches Patentamt

European Patent Office

Office européen des brevets

(19)

(11) Publication number: **0 397 442**

**A1**

(12) **EUROPEAN PATENT APPLICATION**

(21) Application number: **90304934.4**

(22) Date of filing: **08.05.90**

(51) Int. Cl.5: **B60T 13/66, B60T 8/36**

(30) Priority: **08.05.89 GB 8910567**

(43) Date of publication of application:
**14.11.90 Bulletin 90/46**

(84) Designated Contracting States:
**DE FR GB IT SE**

(71) Applicant: **CLAYTON DEWANDRE COMPANY
LIMITED**
**PO Box 15, Beacon Works**
**Morley, Leeds, LS27 0TD(GB)**

(72) Inventor: **Hawker, Michael John**
**7 Nursery Grove**
**Lincoln, LN2 1RS(GB)**

(74) Representative: **Hartley, David et al**
**Withers & Rogers 4 Dyer's Buildings Holborn**
**London, EC1N 2JT(GB)**

(54) Modulator type brake valve.

(57) A braking system for vehicles capable of providing front and rear braking control on a vehicle with a vertical split braking system front to rear in response to an electrical signal (1) generated by operation of the brake pedal, comprises a modulator-type dual brake valve assembly delivering pressure fluid to the vehicle brakes and including solenoid operated inlet and exhaust valves controlling communication between modulator supply and exhaust flows and a solenoid delivery port (16). A solenoid operated modulator may be used solo but for heavier duty the modulator brake valve incorporates a pilot operated hydraulic modulator, the solenoid delivery port (16) being connected to provide the pilot signal pressure. With a normally open solenoid inlet valve and normally closed solenoid exhaust valve the pilot operated modulator responds inversely ·to the solenoid operated modulator and has a normally closed inlet (1) and normally open exhaust (2) when no brake delivery pressure is commanded by the pilot signal. Anti-lock modulation without the need for a separate hydraulic modulator is possible by providing a control unit (110) generating anti-lock command signals (6, 5) that are given priority over braking command signals (4, 3).

EP 0 397 442 A1

Xerox Copy Centre

FIG.5

This invention relates to a modulator type brake valve and to a vehicle "braking system" incorporating such a brake valve.

It is well known for so-called antilock systems to include a solenoid operated valve under the control of an ECU, though different designs of solenoid valve are used according to whether light or heavy duty is required. Our EP-A-0288 252 relates to a solenoid valve suitable for antilock modulation on light vehicles and European Patent Application No. 89301252.2 discloses the use of an hydraulic control valve that is pilot operated by such a light solenoid valve to accommodate the increased fluid flow required for heavier vehicles.

Thus only one solenoid valve design is needed, this being used solo at the light end of the range and as a pilot controlling a valve modulator at the heavy end. Usually, an antilock modulator is connected in series with an existing brake valve controlling in response to foot pedal demand, pressure delivered to the brakes.

A conventional brake valve has a normally closed inlet and normally open exhaust, whereas the reverse requirement applies to an antilock modulator.

One object of the present invention is to provide a solenoid operated modulator type brake valve, which as with the antilock modulator of our co-pending European application 89301225.2, can be used solo for light duty and as a pilot controlling a hydraulic slave modulator for heavier duty where increased fluid flow is required.

According to one aspect of this invention, we propose a braking system for vehicles comprising brake pedal operated means for generating an electrical signal representing the level of braking demanded, a control unit connected to receive the said signal and a modulator-type brake valve having provision for fluid supply, delivery and exhaust flows and comprising a solenoid operated inlet valve and a solenoid operated exhaust valve together forming a modulator for controlling in response to solenoid input signals generated by the control unit, communication respectively between the said supply and exhaust flows and a solenoid delivery port.

For light duty the solenoid delivery port may be connected to supply the brake actuators directly, that is to say the solenoid operated modulator is used solo. In this case, the solenoid inlet valve is normally closed and the exhaust valve normally open although it will be understood that the same effect could be achieved using the opposite or transposed configuration by inverting the electric solenoid input signals. When heavier duty is required the modulator type brake valve incorporates a pilot operated modulator, the solenoid delivery port being connected to provide the pilot signal.

With a solenoid operated modulator having a normally closed inlet and a normally open outlet valve a pilot operated modulator as described in our co-pending European Application 89301225.2 may be used.

It is however, advantageous and we prefer to use a solenoid operated modulator having a normally open inlet valve and a normally closed exhaust valve, since such valves are required for so-called "add-on" anti-lock systems and to use the same (a standard) design of solenoid operated modulator considerably facilitates manufacture.

To this end the modulator-type brake vale preferably incorporates a pilot operated modulator that, in effect, responds inversely to operation of the solenoid operated modulator and has a normally closed inlet and normally open exhaust when no brake delivery pressure is commanded by the pilot signal.

In accordance with another aspect of the present invention therefore, we propose a pilot operated hydraulic modulator having provision for supply, delivery and exhaust flows and comprising main piston means, auxiliary piston means, an inlet valve operable by travel of one of said piston means to control communication between supply and delivery and an exhaust valve operable by travel of the other piston means to control communication between delivery and exhaust, wherein pilot signal pressure is applied to urge the main piston means to a position wherein the inlet valve is closed and the exhaust valve is open and wherein the main piston travels in response to pilot signal pressure and during part of its travel controls travel of the auxiliary piston away from a stopped position towards which the auxiliary piston is biased.

In a preferred embodiment, the auxiliary piston and a stationary piston defining the stopped position of the auxiliary piston are subject to only zero exhaust pressure on their projected areas but the main piston has three equal areas, one for constant supply pressure, one for delivered pressure and one for pilot signal pressure arranged so that the latter two combine their pressure force to give equilibrium against the former.

As the pilot output pressure falls from supply to zero so the delivered pressure must rise from zero to supply to maintain the equilibrium, this being achieved by the selection of pressure areas and bias springs.

Embodiments of the invention will now be described by way of example with reference to the accompanying drawings in which:

Figure 1 is a perspective view of a solenoid operated modulator-type dual brake valve assembly;

Figure 2 is cross-section through one of the solenoid valve/modulator/valve combinations shown in Figure 1;

Figure 3 is a diagram illustrating the effort/travel characteristics of the valve combination of Figure 2;

Figure 4 is a perspective view of an alternative embodiment of solenoid operated modulator-type dual brake valve assembly;

Figure 5 is a cross-section through one of the solenoid valve/modulator valve combinations shown in Figure 4;

Figure 6 is a diagram of a vehicle braking system incorporating a dual brake valve assembly such as shown in Figures 1 and 2 or Figures 4 and 6;

Figure 7 is a diagram of electrical signals at various points in Figure 6 when the system includes the assembly of Figures 1 and 2;

Figure 8 is a diagram similar to Figure 7 but of a system including the assembly of Figures 4 and 5;

Figure 9 is a diagram of a vehicle braking system as in Figure 6 and adapted for antilock brake pressure modulation; and

Figure 10 is a diagram of electrical signals at various points in the system of Figure 9.

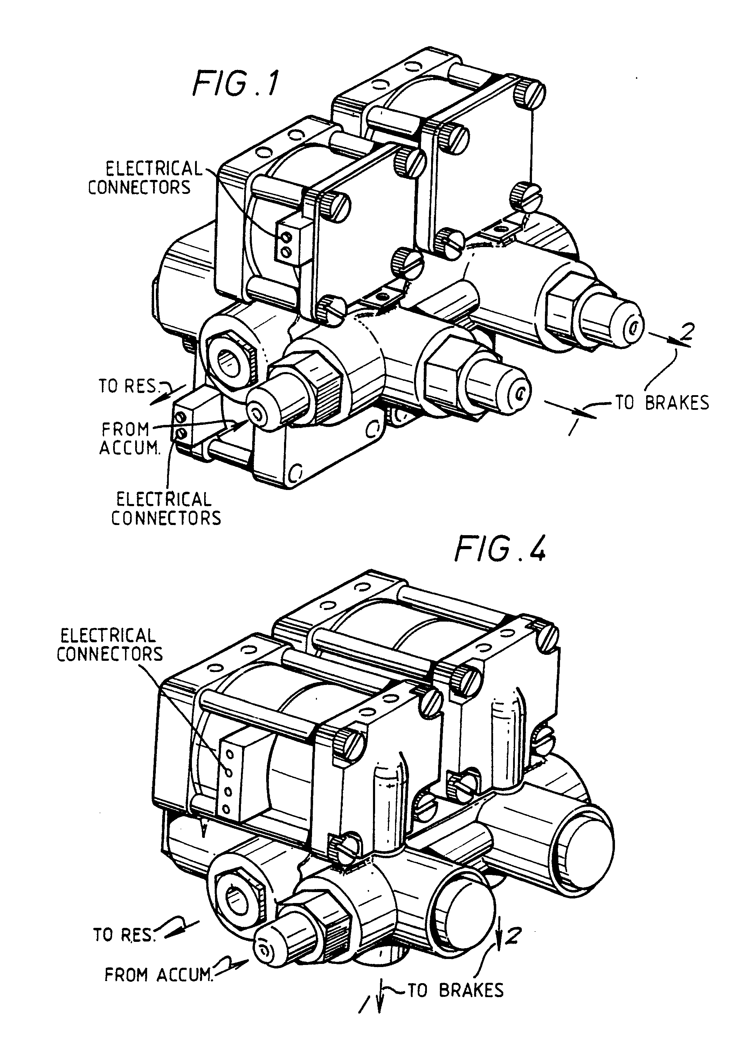

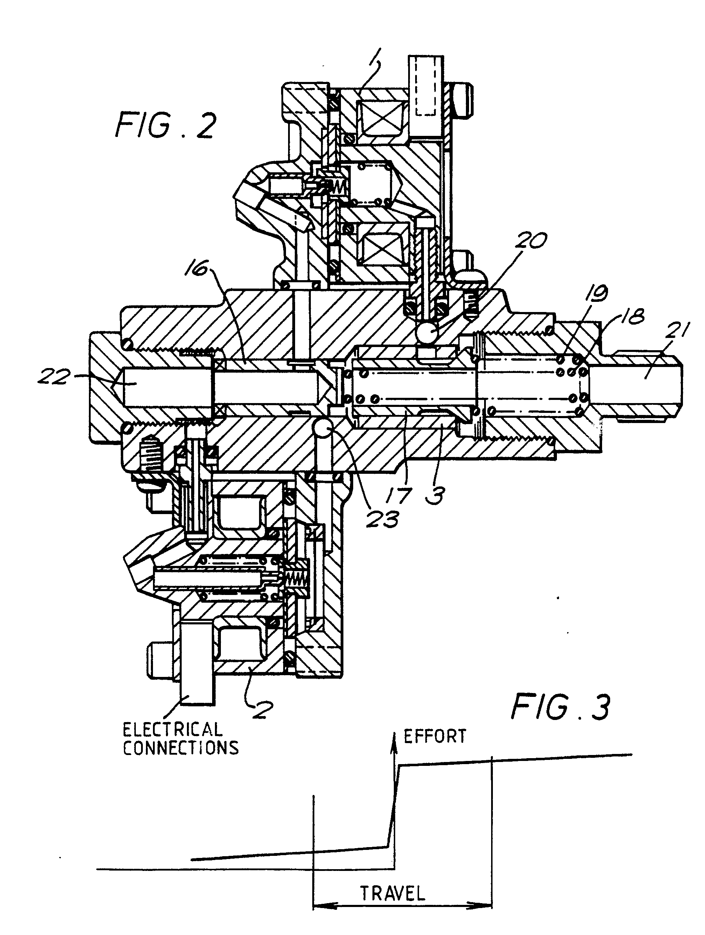

The solenoid operated modulator-type dual brake valve assembly of Figures 1 and 2 is capable of providing front and rear braking control on a vehicle with a vertical split braking system front to rear, in response to an electrical signal generated by operation of the brake pedal. It is similar in construction and operation to the pilot operated antilock modulator described in our co-pending European Patent Application No. 89301225.2 (the disclosure of which is incorporated herein by reference) except that the various valve functions are transposed; normally open valve become normally closed and normally closed valve become normally open. This is because the antilock modulator of our co-pending application is placed in series with an existing brake valve, whereas the modulator type dual brake valve assembly shown in Figures 1 and 2 replaces the conventional brake valve (and its mechanical input).

Referring now to Figure 2 which is a cross-section through one of the solenoid valve/modulator valve combinations of the dual brake valve assembly, fluid supply pressure (from a pump or accumulator not shown) is applied to an inlet port 20 and to a normally closed inlet solenoid valve 1, the inlet solenoid valve delivery pressure at 14 being applied via a drilling in the modulator valve body to a chamber 22 containing a main piston 16 which serves as the spool of an exhaust valve and is referred to as an exhaust piston, the piston 16 being slidable within the body to open and close communication with an exhaust port 23. An auxiliary piston 17 slidable within a sleeve 3 which may be of ceramic material within the body cooperates with the inlet or supply port 20 to form a delivery valve, and hence is referred to as a delivery piston. In this case, the delivery valve is a seated valve, the valve cooperating with seat on the sleeve providing a stop limiting travel of the delivery piston 17 leftward (in Figure 2) and beyond which the exhaust piston 16 travels alone. A spring 19 biases the delivery piston 17 towards its seated or stopped position so that the delivery valve is normally closed shutting off communication between inlet port 20 and (brake pressure) delivery port 21. The exhaust piston 16 is also biased by a spring 18 to the left in Figure 2.

In operation, supply pressure entering the inlet port 20 is contained by the normally closed delivery valve (17) and also by the normally closed solenoid valve 1. Brake pressure at delivery port 21 and the pilot pressure in chamber 22 are exhausted to reservoir at port 23 past the open exhaust piston 16 and through the normally open solenoid valve 2.

The construction and operation of suitable solenoid valves is set out in more detail in our EP-A-0 288 252.

Upon application of the brake pedal, electric signals are generated such that a small initial movement closes the exhaust solenoid 2 and a further small movement opens the inlet solenoid 1. Supply pressure in chamber 22 then urges the exhaust piston 16 to the right closing the exhaust port 23. It then abuts the delivery piston causing it to travel away from its stop (seat) to open the delivery valve admitting supply pressure to the brake pressure delivery port 21; the brake pressure being held at the level demanded by means to be described below.

When the brake pedal is released, the electrical signals to the solenoid valves are switched off, permitting inlet solenoid valve 1 to close and exhaust solenoid valve 2 to open whereupon the supply pressure is once again contained and the brake delivery port 21 and chamber 22 are connected to exhaust port 23.

The above described solenoid operated modulator-type dual brake valve assembly incorporates a normally closed inlet solenoid and a normally open exhaust solenoid. This is a disadvantage insofar that a standard valve for use as an add-on antilock modulator cannot be used as proposed in our European Patent Application No. 89301225.2. Separate single solenoid valve are needed and this is costly.

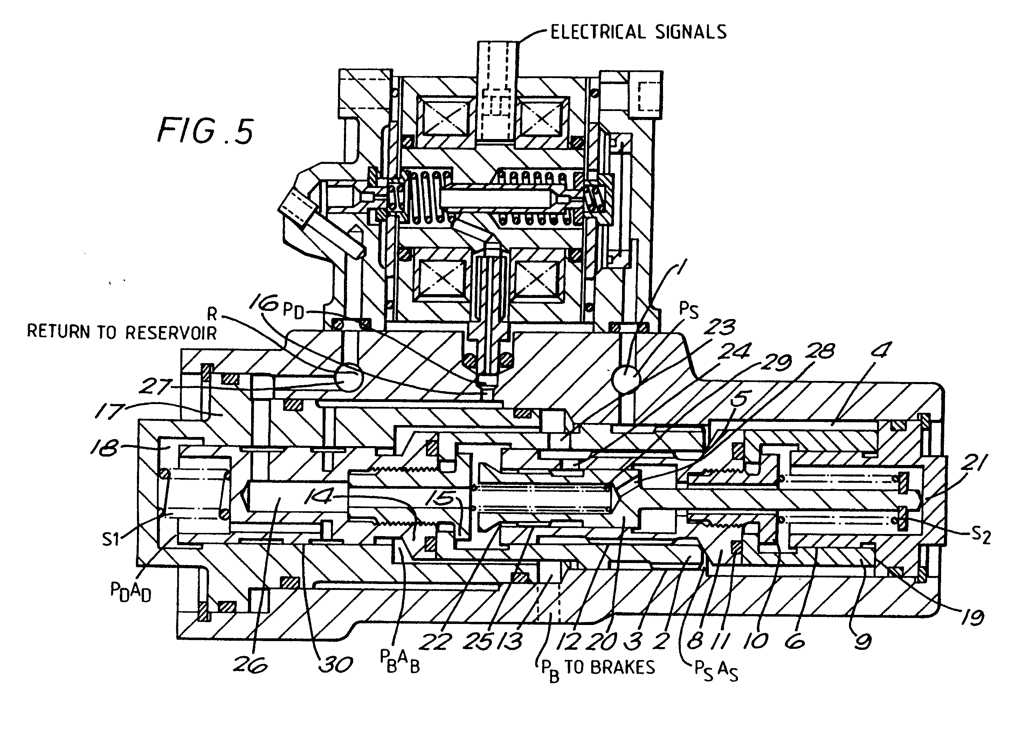

An alternative embodiment of the present invention shown in Figures 4 and 5, avoids this disadvantage enabling a standard solenoid valve having normally open inlet solenoid and a normally closed exhaust such as needed for add-on antilock systems, to be used also in a dual brake valve assembly or system in accordance with the present invention. Whereas in the anti-lock modulator of European Patent Application 89301225.2 and brake valve assembly described above with reference to Figures 1 and 2, the pilot operated modulator or relay valve operates as a slave unit but with increased fluid flow, the three-state pressure modulation of the solenoid inlet/exhaust valve combination, the pilot operated modulator or relay produces fluid pressure conditions which represent an inversion of the condition of the solenoid valve combination. Although the modulator or relay valve is more complicated at least the more expensive solenoid valve combination can be standard for all purposes.

Accumulator pressure $P_S$ enters at supply port 1 passing spool 2 which has a spiral groove 3 and pressurises chamber 4. The closed seat diameter 5 is the same as spool diameter 6 so there is no resultant pressure force on the sub-assembly of items 8, 9 and 10 which is also a spool fit inside item 2. Seal 11 effects a pressure tight concentrically slideable joint between spool fit 6 and spool fit 12 which also has a spiral groove communicating chamber 4 to chamber 13, and on to the brakes when the valve 5 opens.

The accumulator pressure $P_s$ in chamber 4 acts over the spool area $A_S$ from seat 5 to fit 3 and urges the sub-assembly of 2, 14 and 15 leftwise. The modulator delivery pressure $P_D$ at 16 passes through sleeve 17 and spool 14 into chamber 18 to act over the area $A_D$ of spool 14. When the brake pedal is in the released position the modulator inlet is open and $P_D = P_S$ also the area $A_D$ is constructed to equal $A_S$ so the resultant pressure force balances on the sub-assembly 2, 14 and 15. Spring $S_1$ is more powerful than $S_2$ plus spring 29 and urges the sub-assembly rightwise against sub-assembly 8, 9 and 10 and onto stop 19.

The spool 20 bottoms at 21 such that the exhaust valve seat 22 is open in the pedal released condition dumping brake pressure 13 to reservoir via drillings 23 and 24, spiral groove 25, open valve 22, drilling 26 and connection 27. Drilling 28 also vents various other chambers to reservoir.

If the brake pedal is applied say equivalent to 500 psi at the brakes the following takes place: the modulator inlet closes and the exhaust opens to pulse $P_D$ down from 2500 psi to 2000 psi. The reduced force $P_D A_D$ in chamber 18 allows the sub-assembly 2, 14 and 15, also concentrically slideable, to move leftwise closing the valve 22 and opening the valve 5 by the spring 29 continuing to urge item 20 against its stop at 21 and this in turn constraining item 8. The opening of valve 5 allows supply pressure $P_S$ to enter chamber 13 via spool spiral 12 and drilling 23 then onto the brakes, the pressure also sets over the area $A_B$ between the spool bores 30 and 3 producing a force which adds to that produced in chamber 18 (i.e. $P_D A_D$). The area $A_B$ is so constructed to equal $A_D$ and also $A_S$ so we have the equation:

$$P_B A_B + P_D A_D = P_S A_S$$

and since $A_B = A_D = A_S$

we get $P_B = P_S - P_D$ (e.g. 500 psi = 2500-2000)

so there is a progressive rise in brake pressure $P_B$ (say from 0 -2500 psi) as the pedal is applied and the modulator reduces $P_D$ (from 2500 - 0 psi) with the accumulator supply pressure steady at $P_S = 2500$ psi.

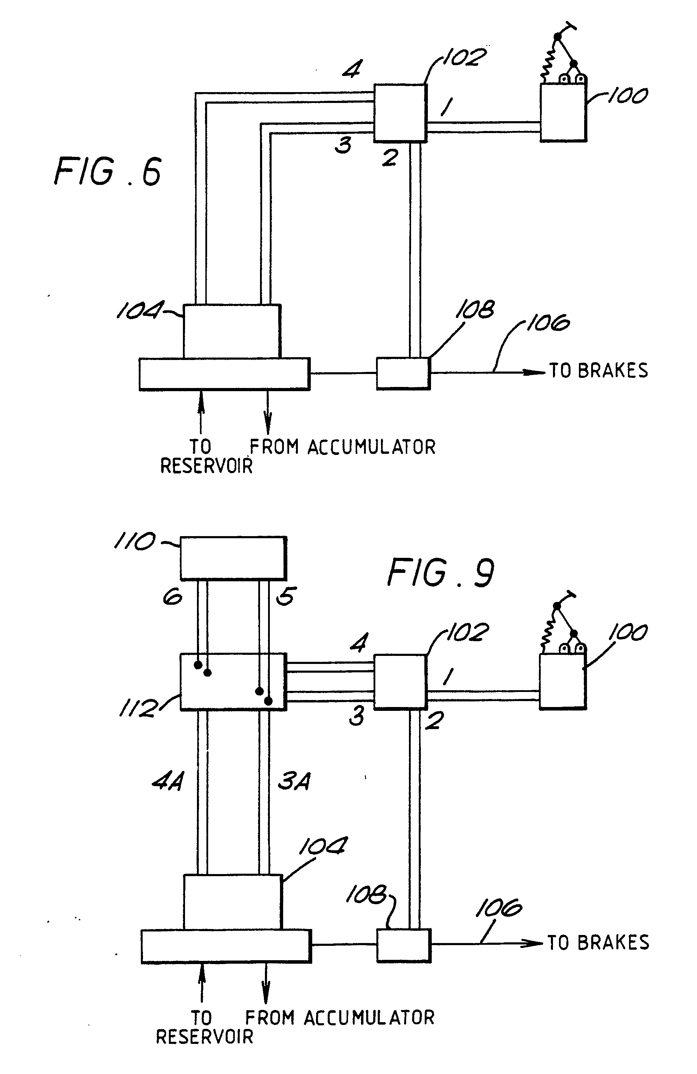

The vehicle braking system shown schematically in Figure 6 includes a resistive or inductive pedal box 100 producing an output signal 1 of say 0 to 6 volts proportional to 0 to 100 lbf pedal effort against a spring load, connected to a switching processor 102 providing command signals 3, 4 (0-12V) respectively to the inlet and exhaust solenoid valves of solenoid pilot operated modulator-type brake valve assembly 104 which may be either as described with reference to Figures 1 and 2 or with reference to Figures 4 and 5. The assembly 104 is connected to brake pressure delivery line 106 in which is fitted a delivery transducer 108 producing a feedback signal (typically 0 - 1 volt) proportional to the brake delivery pressure (typically 0 - 2000 psi). Switching processor 102 is programmed to generate command signals in response to the pedal box 1 and feedback 2 signal appropriate to whichever type of solenoid/relay brake valve assembly is used. Table 1 sets out typical signals 1 to 4 and the corresponding brake pedal operation appropriate to the embodiment of Figures 1 and 2. Table II is the equivalent for the embodiment of Figures 4 and 5. The signal diagrams 7 and 8 correspond respectively to the information contained in Tables I and II. Briefly, the system operates as follows:

1. A small initial movement of the pedal leads to closure of the relay exhaust.

2. Upon an increase in pedal effort signal 1 becomes larger than signal 2 causing generation of command signal to open the inlet valve.

3. The relay valve then delivers pressure to the brakes accordingly signal 2 rises to balance the pedal demand signal 1, and delivery is then switched off establishing the brake pressure hold condition.

4. When the pedal is released signal 1 falls below signal 2 whereupon command signals 3 and 4 are switched off allowing brake pressure to be exhausted.

5

TABLE 1

| (1) | (2) | (3) | (4) | Time | Remarks |
|---|---|---|---|---|---|
| 0 | 0 | 0 | 0 | | Pedal release |
| | | | | | Foot removed |
| | | | | $t_1$ | Instant of brake application |
| 0.1Vsay | 0 | 0 | 12V | $t_2$ | Pedal just touched |
| 0.2V | 0 | 12V | 12V | $t_3$ | Pedal effort slightly increased |
| 3V | voltage rising | 12V | 12V | $t_4$ | Pedal 1/2 applied |
| 3V | 0.5V | 0 | 12V | $t_5$-$t_6$ | Pedal hold |
| 3.2V | 0.5V | 12V | 12V | $t_7$ | Pedal effort slightly increased |
| 6V | voltage rising | 12V | 12V | $t_8$ | Pedal fully applied |
| 6V | 1V | 0 | 12V | $t_8$-$t_{10}$ | Pedal hold |
| | | | | $t_{10}$ | Instant of brake release |
| 5.8V | voltage falling | 0 | 0 | $t_{11}$ | Pedal effort slightly decreased |
| 0 | voltage falling | 0 | 0 | $t_{12}$ | Pedal fully released |
| 0 | 0 | 0 | 0 | | Pedal released and foot removed |

TABLE II

| (1) | (2) | (3) | (4) | Time | Remarks |
|---|---|---|---|---|---|
| 0 | 0 | 0 | 0 | | Pedal release |
| | | | | | Foot removed |
| | | | | $t_1$ | Instant of brake application |
| 0.1Vsay | 0 | 12V | 0 | $t_2$ | Pedal just touched |
| 0.2V | 0 | 12V | 12V | $t_3$ | Pedal effort slightly increased |
| 3V | voltage rising | 12V | 12V | $t_4$ | Pedal 1/2 applied |
| 3V | .5V | 12V | 0 | $t_5$-$t_6$ | Pedal hold |
| 3.2V | .5V | 12V | 12V | $t_7$ | Pedal effort slightly increased |
| 6V | voltage rising | 12V | 12V | $t_8$ | Pedal fully applied |
| 6V | 1V | 12V | 0 | $t_8$-$t_{10}$ | Pedal hold |
| | | | | $t_{10}$ | Instant of brake release |
| 5.8V | voltage falling | 0 | 0 | $t_{11}$ | Pedal effort slightly decreased |
| 0 | voltage falling | 0 | 0 | $t_{12}$ | Pedal fully released |
| 0 | 0 | 0 | 0 | | Pedal released and foot removed |

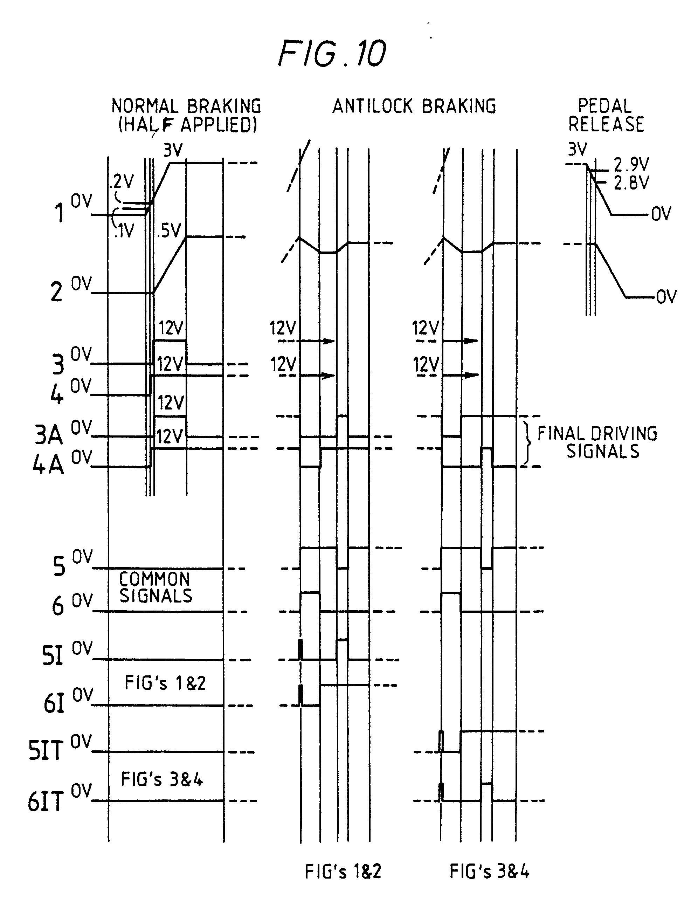

Incorporation of antilock modulation in the braking system of Figure 6 is possible without the need for a separate hydraulic antilock modulator using a standard antilock control unit (ECU) 110 connected as shown in Figure 9 to a priority control circuit 112 programmed or otherwise adapted to ensure that antilock command signals 5 and 6 from the control unit 110 take priority over brake pressure command signals 3 and 5 from the switching processor 102. In order that the modulator type brake valve can operate when priority is taken, as an antilock modulator, it will be understood that the standard inlet 5 and exhaust 6 antilock command signal are inverted producing command signals 5I and 6I this being achieved by the priority control circuit 112. Additionally, in the case of embodiment of Figures 4 and 5 in which an inverting relay or pilot operated modulator is used to enable the use of a standard (normally open inlet and normally closed outlet) solenoid valve as a brake valve, the standard ECU command signals need to be transposed by the priority control circuit 112 to produce command signals 5IT and 6IT.

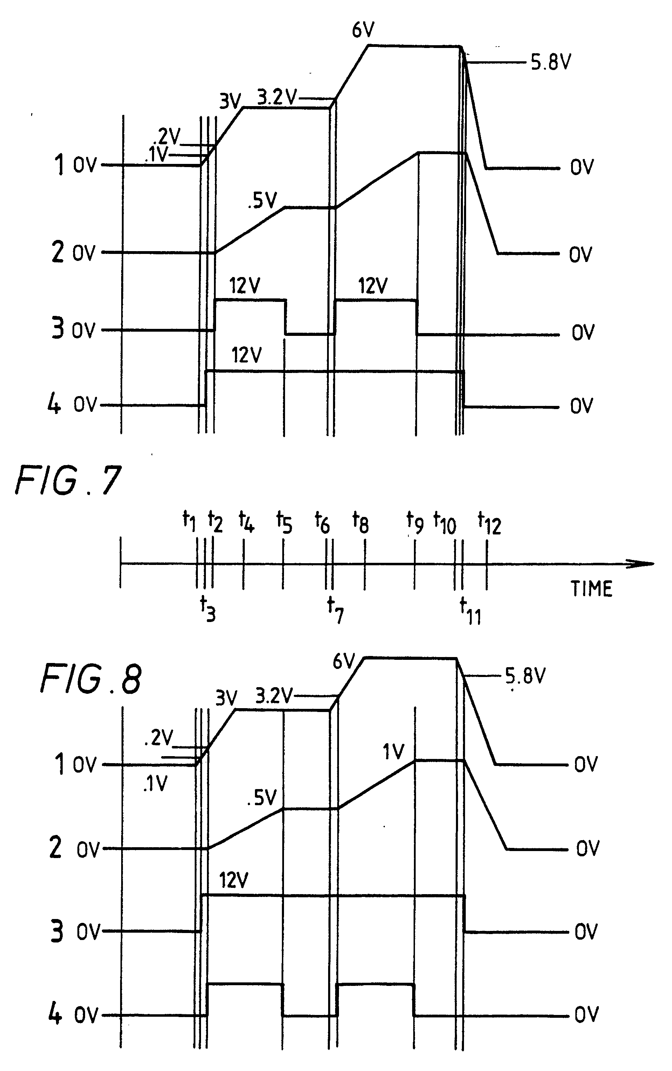

During normal baking (without antilock) the brake command signals are switched direct to the brake valve 104 inputs 3A and 4A and operation is as described with reference to Figures 6 to 8. When antilock modulation is to take place i.e. when ECU command signals 5 and 6 are present, the priority control circuit 112 applies the derivative signals 5I (or 5IT) and 6I (or 6IT) to the brake valve assembly 104. The derivative signals are not permitted (by control circuit 112) to command a higher level of braking than that demanded and represented at any one time by the brake demand signals 3 and 4.

The signal/timing diagram of Figure 10 shows the signal level at various points in the system of Figure 9 when operating in either the normal braking mode or in the antilock mode and for system incorporating a modulator-type brake valve according to the embodiment (A) of Figures 1 and 2 or according to the embodiment (B) of Figures 4 and 5

## Claims

1. A braking system for vehicles comprising brake pedal operated means for generating an electrical signal representing the level of braking demanded, a braking control unit connected to receive the said signal and a modulator-type brake valve having provision for fluid supply, delivery and exhaust flows and comprising a solenoid operated inlet valve and a solenoid operated exhaust valve together forming a solenoid operated modulator for controlling in response to solenoid input signals generated by the control unit, communication respectively between the said supply and exhaust flows and a solenoid delivery port.

2. Braking system according to claim 1 wherein the modulator-type brake valve comprises in combination with the said solenoid operated modulator a pilot operated modulator having provision for supply, delivery and exhaust flows, the solenoid delivery port being connected to provide a pilot signal pressure to the pilot operated modulator.

3. A braking system according to claim 2 wherein the solenoid inlet valve is normally closed and the solenoid exhaust valve is normally open and wherein the pilot operated hydraulic modulator comprises main piston means, auxiliary piston means, an inlet valve operable by travel of one of said piston means to control communication between supply and delivery and an exhaust valve operable by travel of the other piston means to control communication between delivery and exhaust, wherein the main piston travels in response to the said pilot signal pressure and during part of its travel controls travel of the auxiliary piston away from a stopped position towards which the auxiliary piston is biased.

4. A braking system according to claim 1 or claim 2 wherein the solenoid operated modulator has a normally open inlet valve and a normally closed exhaust valve.

5. A braking system according to claim 2 wherein the solenoid operated modulator has a normally open inlet valve and a normally closed exhaust valve and wherein the pilot operated hydraulic modulator comprises main piston means, auxiliary piston means, an inlet valve operable by travel of one of said piston means to control communication between supply and delivery and an exhaust valve operable by travel of the other piston means to control communication between delivery and exhaust, wherein pilot signal pressure is applied to urge the main piston means to a position wherein the inlet valve is closed and the exhaust valve is open and wherein the main piston travels in response to pilot signal pressure and during part of its travel controls travel of the auxiliary piston away from a stopped position towards which the auxiliary piston is biased.

6. A braking system according to claim 5 wherein the auxiliary piston and a stationary piston defining the stopped position of the auxiliary piston are subject to only zero exhaust pressure on their projected areas but the main piston has three equal areas, one for constant supply pressure, one for delivered pressure and one for pilot signal pressure arranged so that the latter two combine their pressure force to give equilibrium against the former.

7. A braking system according to any preceding claim and comprising a pressure transducer responsive to the modulator-type brake valve delivery pressure and connected to provide to the control unit a feed back control signal representative of the brake delivery pressure.

8. A braking system according to any preceding claim and comprising an anti-lock control unit and a priority control circuit to which the braking control unit and the anti-lock control unit are connected respectively to provide braking command signals and anti-lock command signals, the priority control circuit being connected to provide said solenoid input signals in response to said command signals such that anti-lock command signals take priority over braking command signals.

9. A pilot operated hydraulic modulator having provision for supply, delivery and exhaust flows and comprising main piston means, auxiliary piston means, an inlet valve operable by travel of one of said piston means to control communication between supply and delivery and an exhaust valve operable by travel of the other piston means to control communication between delivery and exhaust, wherein pilot signal pressure is applied to urge the main piston means to a position wherein the inlet valve is closed and the exhaust valve is open and wherein the main piston travels in response to pilot signal pressure and during part of its travel controls travel of the auxiliary piston away from a stopped position towards which the auxiliary piston is biased.

10. An hydraulic modulator according to claim 9 wherein the auxiliary piston and a stationary piston defining the stopped position of the auxiliary piston are subject to only zero exhaust pressure on their projected areas but the main piston has three equal areas, one for constant supply pressure, one for delivered pressure and one for pilot signal pressure arranged so that the latter two combine their pressure force to give equilibrium against the former.

11. An hydraulic modulator according to claim 9 or claim 10 in combination with a solenoid operated inlet valve and a solenoid operated exhaust valve together forming a modulator for controlling in response to applied electrical solenoid input signals communication respectively between the said supply and exhaust flows and a solenoid delivery port connected to provide the said pilot signal.

12. An hydraulic modulator according to claim 11 wherein the solenoid operated modulator has a normally open inlet valve and a normally closed exhaust valve.

## FIG .1

ELECTRICAL CONNECTORS

TO RES.

FROM ACCUM.

ELECTRICAL CONNECTORS

TO BRAKES

2

## FIG .4

ELECTRICAL CONNECTORS

TO RES.

FROM ACCUM.

2

TO BRAKES

*FIG . 2*

*FIG . 3*

ELECTRICAL
CONNECTIONS

EFFORT

TRAVEL

FIG.5

RETURN TO RESERVOIR

ELECTRICAL SIGNALS

$P_B$ TO BRAKES

FIG . 6

FIG . 9

TO RESERVOIR   FROM ACCUMULATOR

TO BRAKES

FIG.7

FIG.8

# FIG .10

NORMAL BRAKING (HALF APPLIED)

ANTILOCK BRAKING

PEDAL RELEASE

COMMON SIGNALS

FINAL DRIVING SIGNALS

FIG's 1&2

FIG's 3&4

FIG's 1&2      FIG's 3&4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | DE-A-2363527 (YARBER)<br>* page 6, paragraph 1 - page 14, paragraph 1; figure * | 1, 2, 4, 8 | B60T13/66<br>B60T8/36 |
| A | | 3, 5-7, 9-12 | |
| A | DE-A-2437060 (TELDIX)<br>* page 2, paragraph 4 - page 4, paragraph 2; figure 1 * | 1, 5, 9 | |
| A | US-A-3286734 (HARTSHORNE)<br>* column 3, line 25 - column 6, line 33; figures 2-4 * | 1, 5, 9 | |
| A | EP-A-163774 (ROBERT BOSCH)<br>* page 4, paragraph 3 - page 6, last paragraph; figure * | 1, 7, 8 | |
| A | FR-A-2105256 (DAIMLER-BENZ)<br>* page 4, line 4 - page 5, line 18; figure * | 1, 7, 8 | |
| A | DE-A-3345756 (MANNESMANN REXROTH)<br>* claims 1, 2, 11; figures 1, 2 * | 1, 7 | TECHNICAL FIELDS SEARCHED (Int. Cl.5)<br><br>B60T |
| P,A,<br>D | EP-A-329333 (CLAYTON DEWANDRE)<br>* column 3, line 32 - column 6, line 40; figures 3, 4, 6 * | 1-6, 9-12 | |

The present search report has been drawn up for all claims

| Place of search | Date of completion of the search | Examiner |
|---|---|---|
| THE HAGUE | 01 AUGUST 1990 | MEIJS P. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)